**Europäisches Patentamt**

**European Patent Office**

**Office européen des brevets**

(19)

(11) Numéro de publication: **0 022 389**

**A1**

(12) **DEMANDE DE BREVET EUROPEEN**

(21) Numéro de dépôt: **80400883.7**

(22) Date de dépôt: **17.06.80**

(51) Int. Cl.³: **A 01 G 9/24**
**F 24 J 3/02**

(30) Priorité: **22.06.79 FR 7916082**

(43) Date de publication de la demande:
**14.01.81 Bulletin 81/2**

(84) Etats Contractants Désignés:
**BE DE GB IT NL**

(71) Demandeur: **COMMISSARIAT A L'ENERGIE ATOMIQUE Etablissement de Caractère Scientifique Technique et Industriel**
**B.P. 510**
**F-75752 Paris Cedex 15(FR)**

(72) Inventeur: **Bost, Joseph**
**20, Avenue Général Champon**
**F-38100 Grenoble(FR)**

(72) Inventeur: **Fourcy, André**
**Cidex 521 - Biviers**
**F-38330 Saint Ismier(FR)**

(72) Inventeur: **Freychet, Aimé**
**77, Avenue Jeanne d'Arc**
**F-38100 Grenoble(FR)**

(74) Mandataire: **Mongredien, André et al,**
**c/o Brevatome 25, rue de Ponthieu**
**F-75008 Paris(FR)**

(54) **Procédé et installation de climatisation pour serres et abris.**

(57) Panneau modulaire pour une installation de climatisation comprenant deux plaques parallèles (4,6) constituées par des matériaux transparents, lesdites plaques ayant une forme sensiblement rectangulaire, un joint réalisé en élastomère entourant le pourtour desdites plaques (4,6) des moyens pour appliquer une pression sur le rebord desdites plaques (4,6) et assurer ainsi une étanchéité de l'espace limité par lesdites plaques et ledit joint (6c), au moins un raccord (14a) traversant la plaque inférieure (6) tournée vers l'intérieur de l'installation pour permettre l'introduction d'un liquide caloporteur et au moins un raccord (14b) traversant ladite plaque inférieure (6) pour permettre la sortie dudit liquide caloporteur.

Application des panneaux à la réalisation d'installations de culture.

./...

EP 0 022 389 A1

FIG. 1

La présente invention a pour objet un panneau modulaire à double paroi permettant la climatisation de jour et de nuit d'une enceinte à l'intérieur de laquelle sont cultivées des plantes.

On connaît, par exemple par le brevet français n° EN 74 17921, déposé le 22 mai 1974 au nom du demandeur, un procédé de climatisation de jour et de nuit d'une enceinte à l'intérieur de laquelle sont cultivées des plantes dont une partie au moins est composée d'au moins deux parois transparentes délimitant entre elles un espace intermédiaire rempli d'un liquide caloporteur, ce procédé se caractérisant en ce qu'on limite sélectivement de jour la pénétration de l'énergie solaire dans ladite enceinte en absorbant sélectivement au moyen d'un filtre optique constitué par lesdites parois et ledit liquide, les radiations dont la longueur d'onde est supérieure à celle des radiations utiles à la croissance des plantes ; on évacue de jour les calories absorbées en faisant circuler ledit liquide dans un circuit fermé et on les accumule dans le réservoir distinct du volume compris entre lesdites parois et on maintient de nuit une température minimale à l'intérieur de l'enceinte en faisant circuler ledit liquide stocké dans ledit espace intermédiaire.

Dans le brevet cité, on revendique également une installation pour la mise en oeuvre de ce procédé qui se caractérise en ce qu'elle comporte d'une part une enceinte dont une partie au moins est composée d'au moins deux parois transparentes délimitant au moins un espace intermédiaire rempli d'un liquide caloporteur, lesdites parois et ledit liquide constituant un filtre optique qui absorbe les radiations dont la longueur d'onde est supérieure à un seuil compris entre 6 000 et 7 500 $\overset{o}{A}$ selon les cultures et d'autre part, un circuit fermé comprenant ledit espace intermédiaire entre les parois et un réservoir d'accumulation de calories distinct de celui-ci ainsi qu'une pompe.

B 6654.3 LW

La présente invention a pour objet un panneau modulaire à double paroi permettant la réalisation de l'enceinte pour la mise en oeuvre du procédé.

De façon plus précise, l'invention concerne une structure modulaire à double paroi permettant d'une part la circulation du liquide et d'autre part la mise en oeuvre de la fonction de filtrage optique, tout en permettant une fabrication aisée de ce module et l'interchangeabilité des pièces entre elles. En d'autres termes, la présente invention concerne une structure modulaire à double paroi, permettant la mise en oeuvre du procédé dans des conditions économiquement plus rentables.

Le panneau modulaire pour la réalisation d'une installation de climatisation d'une enceinte se caractérise en ce qu'il comprend deux plaques parallèles constituées par des matériaux transparents, lesdites plaques ayant une forme sensiblement rectangulaire ; un joint réalisé en élastomère entourant le pourtour desdites plaques, des moyens pour appliquer une pression sur le rebord desdites plaques pour assurer une compression dudit joint entre lesdites plaques et assurer ainsi une étanchéité de l'espace limité par lesdites plaques et ledit joint ; au moins un raccord traversant la plaque inférieure tournée vers l'intérieur de l'installation pour permettre l'introduction d'un liquide caloporteur, et au moins un raccord traversant ladite plaque inférieure pour permettre la sortie dudit liquide caloporteur.

Selon un premier mode de réalisation, ladite plaque inférieure est réalisée en un matériau qui absorbe les radiations lumineuses pour des longueurs d'onde supérieures à un seuil compris entre 6 000 et 7 500 Å.

Selon un deuxième mode de réalisation, c'est le liquide caloporteur lui-même qui assure la fonction de filtrage appliquée.

B 6654.3 LW

L'invention concerne également l'application des panneaux à la réalisation d'une installation de culture caractérisée en ce que l'enceinte de ladite installation comprend au moins trois plans inclinés, chaque plan étant constitué par plusieurs rangées sensiblement horizontales de panneaux modulaires, les raccords d'entrée des panneaux d'une même rangée étant raccordés à une même conduite d'alimentation en liquide caloporteur, les raccords de sortie des panneaux d'une même rangée étant raccordés à une même conduite d'évacuation du liquide caloporteur.

Le réchauffage de la serre pendant la nuit et le maintien d'une température minimale peuvent être réalisés en faisant circuler le liquide stocké dans des gaines méplates simples posées sur le sol, au lieu de le faire circuler dans l'espace compris entre les deux plaques.

De toute façon, l'invention sera mieux comprise à la lecture de la description qui suit d'un mode de réalisation de l'invention, donné à titre d'exemple non limitatif. La description se réfère aux figures annexées, sur lesquelles on a représenté :

    - sur la figure 1, une vue en coupe longitudinale d'un élément modulaire à double paroi ;

    - sur la figure 2, un premier exemple de forme d'enceinte réalisable à partir des modules représentés sur la figure 1 et permettant de mettre en oeuvre l'installation et le procédé de climatisation d'une enceinte ; et

    - sur la figure 3, une deuxième forme de mise en oeuvre des panneaux modulaires selon la présente invention.

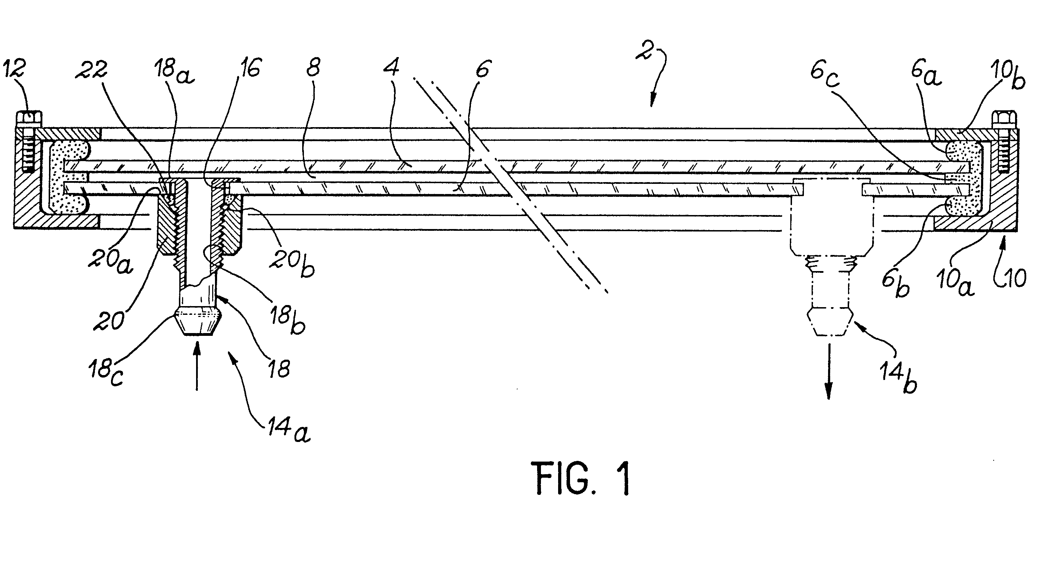

Sur la figure 1, on a représenté en coupe verticale longitudinale et perpendiculairement à la grande surface de celui-ci, un panneau modulaire à double paroi selon la présente invention. Le panneau qui porte la référence générale 2 est constitué principalement par deux plaques transparentes supérieure 4 et inférieure 6 assemblées entre elles selon leur périphérie par des joints à lèvres en caoutchouc.

B 6654.3 LW

La forme de ces panneaux 2, 4 et 6 est de préférence rectangulaire afin de faciliter leur assemblage. Le joint d'étanchéité comporte une lèvre supérieure 6a, une lèvre inférieure 6b et une lèvre médiane 6c qui sert en même temps d'entretoise pour créer entre les plaques 4 et 6 un espace intermédiaire 8. On comprend que cet espace est étanche grâce à la présence des joints en caoutchouc. Un cadre rectangulaire 10 assure le serrage du joint périphérique. Ce joint qui dégage la majeure partie de la surface des plaques transparentes 4 et 6, est constitué par une pièce 10a ayant en section droite la forme d'un L et par un couvre joint 10b vissé sur la pièce 10a par des vis telles que 12. On assure ainsi entre ces deux pièces un certain serrage des lèvres 6a, 6b et 6c du joint en caoutchouc afin de parfaire l'étanchéité.

Comme on l'a déjà indiqué précédemment et pour la mise en oeuvre de l'installation, on fait circuler dans l'espace intermédiaire 8 un fluide caloporteur. Pour permettre l'introduction et l'évacuation de ce liquide dans l'espace 8, chaque panneau comporte un raccord d'entrée 14a et un raccord de sortie 14b. On va décrire plus en détail le raccord 14a d'entrée. Il va de soi que le raccord 14b de sortie est identique et qu'ainsi chaque raccord peut jouer différemment l'un ou l'autre des rôles.

Ces deux raccords 14a et 14b sont situés à deux sommets diagonalement opposés de la surface rectangulaire des panneaux. La plaque inférieure est munie d'une ouverture 16. Le raccord 14a consiste essentiellement en un embout réalisé de préférence en matière plastique 18 qui traverse l'ouverture 16 et qui comporte une collerette formant un épaulement 18a venant en appui sur la face supérieure de la plaque inférieure 6. Cet embout comporte également une partie filetée 18b qui coopère avec un écrou 20 dont la face 20a vient en butée après serrage sur la face inférieure du panneau inférieur 6. L'écrou comporte une surface tronconique évasée 20b qui constitue un logement pour un joint torique 22

B 6654.3 LW

assurant l'étanchéité entre l'embout 14a et l'espace intermédiaire 8. On comprend qu'après serrage et déformation du
joint 22, celui-ci assure une double étanchéité entre l'embout 18 proprement dit, l'écrou 20 et la plaque inférieure
6. On comprend en outre que le montage d'un tel raccord est
très simple. L'extrémité inférieure du raccord 14a et plus
précisément de l'embout 18 (cette extrémité étant référencée
18c) a une forme adéquate pour permettre la fixation d'une
tubulure souple.

Selon un premier mode de réalisation du panneau
modulaire objet de la présente invention, la vitre inférieure
tournée vers la serre 6 est constituée par un verre filtrant
KOA commercialisé par la Société BSN qui permet d'assurer
le filtrage optique du rayonnement solaire dans la gamme
indiquée précédemment. On assure ainsi un meilleur rendement
de la récupération de l'énergie solaire et on limite les
contraintes thermiques pouvant se créer dans l'épaisseur du
filtre 6.

Selon un autre mode de réalisation, le panneau
pourra être constitué par deux plaques transparentes 4 et
6. Dans ce cas, c'est le liquide caloporteur qui assure
lui-même la fonction de filtrage.

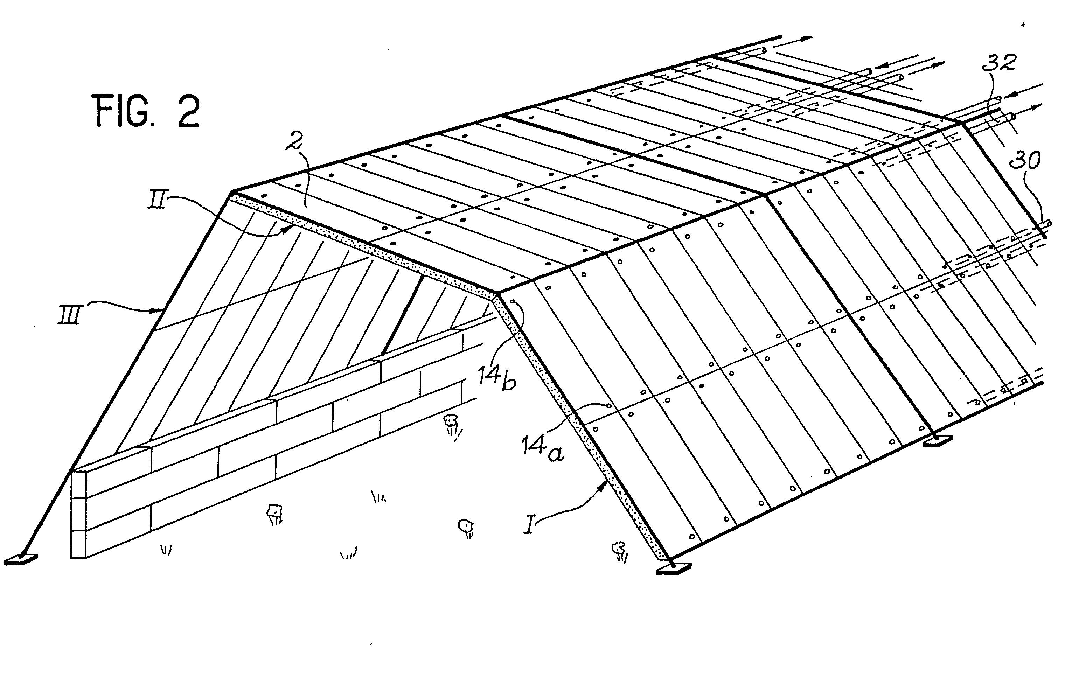

Sur la figure 2, on a représenté en perspective
un premier mode d'assemblage des panneaux modulaires 2 pour
réaliser une enceinte, par exemple pour la culture de plantes.
Dans le cas de cette figure 2, on réalise une serre dite
tunnel à trois plans référencés respectivement I, II et III.
Chaque plan est constitué par l'assemblage de deux rangées
de panneaux. Il est important d'observer qu'afin de résoudre
les problèmes liés à la charge hydrostatique engendrée par la
hauteur de la serre et appliquée au liquide caloporteur,
chaque rangée de modules 2 comporte une conduite d'introduction 30 et une conduite de sortie 32. Bien entendu, chaque
conduite 30 est raccordée à un raccord d'entrée 14a, chaque
conduite de sortie étant raccordée à un raccord de sortie 14b.

6

On évite ainsi d'appliquer des pressions successives sur les plaques 4 et 6 constituant chaque module. Comme cela était décrit dans le brevet cité, la circulation du fluide caloporteur dans les modules est assurée par une pompe associée aux conduites 32 et 30. On voit que si l'axe de l'enceinte-tunnel EST-OUEST, les angles d'inclinaison des plans SUD par rapport à l'horizontale ont été choisis pour assurer un rendement optimal dans la région SUD-EST de la France.

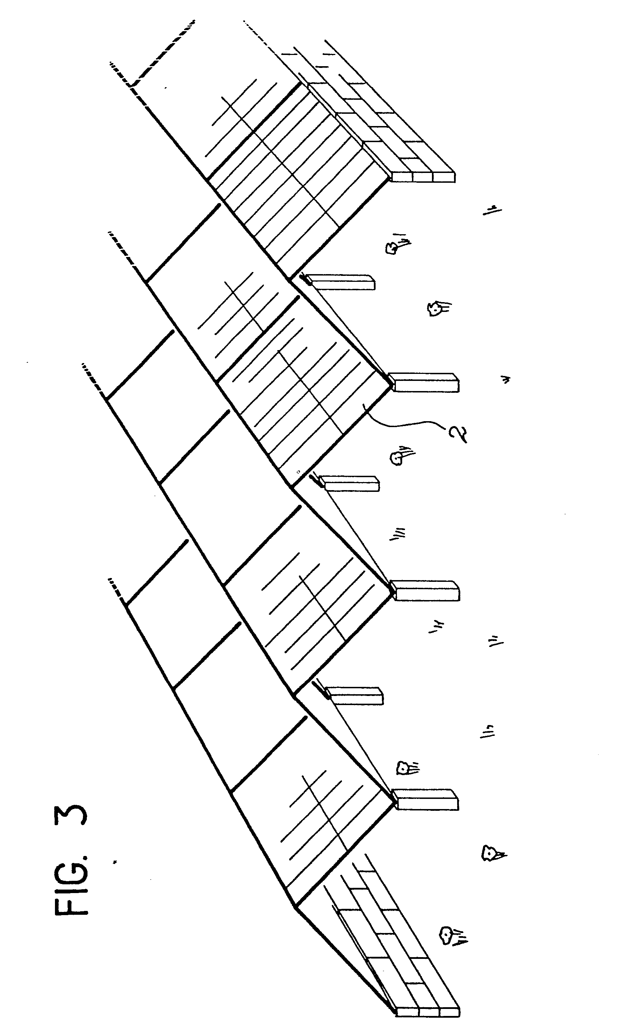

Sur la figure 3a, on a représenté un autre exemple d'association des modules pour réaliser une enceinte dite "chapelle", avec les mêmes disposition pour la circulation du fluide caloporteur.

B 6654.3 LW

REVENDICATIONS

1. Panneau modulaire permettant la climatisation de jour et de nuit d'une enceinte à l'intérieur de laquelle sont cultivées des plantes, caractérisé en ce qu'il comprend deux plaques parallèles (4, 6) constituées par des matériaux transparents, lesdites plaques (4, 6) ayant une forme sensiblement rectangulaire, un joint réalisé en élastomère entourant le pourtour desdites plaques (4, 6), des moyens pour appliquer une pression sur le rebord desdites plaques pour assurer une compression dudit joint (6c) entre lesdites plaques et assurer ainsi une étanchéité de l'espace limité par lesdites plaques et ledit joint, au moins un raccord (14a) traversant la plaque inférieure tournée vers l'intérieur de l'installation pour permettre l'introduction d'un liquide caloporteur , et au moins un raccord 14b traversant ladite plaque inférieure pour permettre la sortie dudit liquide caloporteur.

2. Panneau modulaire selon la revendication 1, caractérisé en ce que ladite plaque inférieure (6) est réalisée en un matériau qui absorbe les radiations lumineuses pour des longueurs d'onde supérieures à un seuil compris entre 6 000 et 7 500 $\overset{o}{A}$.

3. Panneau modulaire selon la revendication 1, caractérisé en ce que ledit liquide caloporteur contient un additif apte à assurer un filtrage du rayonnement lumineux pour des longueurs d'onde supérieures à un seuil compris entre 6 000 et 7 500 $\overset{o}{A}$.

4. Panneau modulaire selon l'une quelconque des revendications 1 à 3, caractérisé en ce que ledit joint d'étanchéité comprend une lèvre centrale (6c) assurant un espacement donné entre lesdites plaques transparentes et une lèvre supérieure (6a) et une lèvre inférieure (6b) recouvrant le rebord desdites plaques (4, 6), lesdits moyens pour appliquer une pression agissant sur lesdites lèvres supérieure et inférieure (6a, 6b).

B 6654.3 LW

5. Panneau modulaire selon l'une quelconque des revendications 1 à 4, caractérisé en ce que chacun desdits raccords (14a, 14b) consiste en un embout (18) traversant ladite plaque inférieure (6) par un alésage et muni d'une collerette (18a) prenant appui sur la face interne de ladite plaque inférieure (6), un écrou (20) coopérant avec une partie filetée (18b) dudit embout (18) et un joint d'étanchéité (22) interposé entre la face externe de ladite plaque inférieure (6) et ledit écrou (20).

6. Panneau modulaire selon la revendication 5, caractérisé en ce que ledit écrou (20) comporte sur sa face tournée vers ladite plaque inférieure (6), une portion conique évasée (20b), ledit joint d'étanchéité (22) étant logé partiellement dans ladite partie évasée (22b).

7. Application du panneau modulaire selon l'une quelconque des revendications 1 à 6 à la réalisation d'une installation de culture, caractérisée en ce que l'enceinte de ladite installation comprend au moins trois plans inclinés, chaque plan étant constitué par plusieurs rangées sensiblement horizontales de panneaux modulaires, les raccords d'entrée (14a) des panneaux d'une même rangée étant raccordés à une même conduite d'alimentation en liquide caloporteur, les raccords de sortie (14b) des panneaux d'une même rangée étant raccordés à une même conduite d'évacuation du liquide caloporteur.

8. Application selon la revendication 7, caractérisée en ce que ladite enceinte a une forme en "chapelle".

FIG. 1

0022389

FIG. 2

2

II

III

14b

14a

I

32

30

2

1

3

FIG. 3

2

**0022389**

Office européen
des brevets

Numéro de la demande

**RAPPORT DE RECHERCHE EUROPEENNE**

EP 80 40 0883

## DOCUMENTS CONSIDERES COMME PERTINENTS

| Catégorie | Citation du document avec indication, en cas de besoin, des parties pertinentes | Revendica-tion concernée |
|---|---|---|
| | <u>FR - A - 2 390 685</u> (COMMISSARIAT A L'ENERGIE ATOMIQUE)<br><br>* Page 4, lignes 22-35; page 8, lignes 9-14; figures 1,7 *<br><br>-- | 1 |
| | <u>US - A - 4 143 643</u> (GERIN)<br><br>* Colonne 3, lignes 4-55; figures 1,2 *<br><br>-- | 1,4 |
| | <u>FR - A - 2 409 466</u> (HELIOTHERM)<br><br>* Page 3, ligne 11 - page 5, ligne 20; figures 1,2 *<br><br>-- | 1,3 |
| | <u>FR - A - 2 344 217</u> (TRIMBOLI LON-<u>GETTO</u>)<br><br>* Description et figures *<br><br>-- | 1,7 |
| | <u>FR - A - 2 304 278</u> (COMMISSARIAT A L'ENERGIE ATOMIQUE)<br><br>* Page 6, ligne 1 - page 8, ligne 36; figures 1,2 *<br><br>-- | 1-3 |
| | <u>US - A - 3 247 999</u> (STILWELL)<br><br>* Colonne 2, lignes 8-19; figure 1 *<br><br>-- | 5 |
| | <u>US - A - 1 556 058</u> (WHITE)<br><br>* Totalité du brevet *<br><br>---- | 5,6 |

**CLASSEMENT DE LA DEMANDE (Int. Cl. 3)**

A 01 G 9/24
F 24 J 3/02

**DOMAINES TECHNIQUES RECHERCHES (Int. Cl. 3)**

A 01 G
F 24 J
F 16 L

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-09-1980 | HERYGERS |

OEB Form 1503.1 06.78